(19) Europäisches Patentamt
European Patent Office
Office européen des brevets

(11) **EP 0 695 717 B1**

(12) **FASCICULE DE BREVET EUROPEEN**

(45) Date de publication et mention
de la délivrance du brevet:
**16.12.1998 Bulletin 1998/51**

(51) Int. Cl.⁶: **B65H 75/02**, B29C 31/00,
B29D 30/52

(21) Numéro de dépôt: **95111907.2**

(22) Date de dépôt: **28.07.1995**

(54) **Stockage en bobines de produits en caoutchouc non vulcanisé**

Verfahren und Vorrichtung zum Speichern von unvulkanisierten Kautschukprodukten auf Haspeln

Method and apparatus for storing on reels unvulcanised rubber products

(84) Etats contractants désignés:
**DE ES FR GB IT**

(30) Priorité: **05.08.1994 FR 9409837**

(43) Date de publication de la demande:
**07.02.1996 Bulletin 1996/06**

(73) Titulaire:
**COMPAGNIE GENERALE DES
ETABLISSEMENTS
MICHELIN - MICHELIN & CIE
63040 Clermont-Ferrand Cédex (FR)**

(72) Inventeur: **Bardy, Daniel**
**F-63100 Clermont-Ferrand (FR)**

(74) Mandataire: **Bauvir, Jacques**
**Michelin & Cie,**
**Service SGD/LG/PI Ladoux**
**63040 Clermont-Ferrand Cedex 01 (FR)**

(56) Documents cités:
**EP-A- 0 621 124        DE-B- 1 260 767**
**DE-B- 1 262 584        DE-C-  822 771**

• **PATENT ABSTRACTS OF JAPAN vol. 10 no. 299
(M-524) ,11 Octobre 1986 & JP-A-61 111261
(BRIDGESTONE CORP.) 29 Mai 1986,**

**Description**

La présente invention concerne la fabrication de produits en caoutchouc. Plus précisément, elle se rapporte au stockage de produits en caoutchouc cru en sortie d'extrusion.

On sait que, à l'état non vulcanisé, le caoutchouc présente un état plutôt plastique. Il en résulte qu'il est très difficile que ce matériau conserve inchangées ses dimensions géométriques s'il est sollicité mécaniquement, par exemple par des opérations de manutention. C'est ainsi qu'il est d'usage courant d'utiliser des intercalaires sur lesquels on dépose le produit en caoutchouc cru à manipuler. L'intercalaire est construit en un matériau présentant une résistance suffisante à l'allongement. Il peut être rigide ou souple en fonction de l'utilisation envisagée. Dans tous les cas, il joue le rôle de support pour le matériau en caoutchouc cru (dont l'état est plastique) et offre une prise permettant toutes les manipulations souhaitées.

A titre d'illustration de l'état de la technique, on peut citer la demande de brevet EP 0 567 147, illustrant un intercalaire utilisé dans l'industrie du pneumatique. Celui-ci se présente sous la forme d'une bande allongée, de dimensions inaltérables sous l'effet des sollicitations de service, présentant deux rebords destinés à protéger le produit stocké entre ceux-ci sur la bande. Malheureusement, lorsque l'on souhaite stocker le produit en bobines, la solution proposée est quelque peu boiteuse car les rebords en question, même entaillés à intervalles réguliers, contrarient inévitablement la flexion de ladite bande lors de l'enroulement.

JP-A-61111261 décrit un dispositif de stockage d'un produit ayant la forme de bande allongée, comportant: une bobine comportant deux flasques, chacun pourvu d'un rebord d'appui aménagé du côté axialement intérieur dudit flasque, et un intercalaire de support dudit produit, ledit intercalaire ayant la forme de bande allongée, reposant sur lesdits rebords d'appui.

L'objectif de la présente invention est de proposer un intercalaire capable de maintenir très efficacement le produit en caoutchouc cru à stocker, tout en autorisant très facilement l'enroulement du produit et de son intercalaire.

Un autre objectif de la présente invention est d'assurer une parfaite homogénéité des produits stockés, quant à leur géométrie telle qu'elle résulte d'une opération de mise en forme, par exemple un calandrage ou une extrusion, et quant à leur rhéologie.

Un autre objectif de l'invention consiste à favoriser un bon refroidissement des produits stockés, c'est à dire un refroidissement uniforme et rapide.

L'invention propose un dispositif de stockage d'un produit en caoutchouc cru, comportant :

- une bobine comportant deux flasques, chacun pourvu d'un rebord d'appui aménagé du côté axialement intérieur dudit flasque, le rebord d'appui ayant l'allure générale d'une spirale formant plus de un tour, ledit rebord d'appui se décalant, à chaque tour, axialement vers l'extérieur ;

- un intercalaire de support dudit produit en caoutchouc, ledit intercalaire ayant la forme de bande allongée, reposant sur lesdits rebords d'appui, ayant une largeur variable, adaptée à l'écartement axial entre lesdits rebords d'appui.

L'invention sera parfaitement comprise grâce à la consultation de la description suivante, illustrant à l'aide des figures jointes et de façon non limitative, des exemples de réalisation concrets permettant de saisir tous les avantages que l'on peut en escompter.

La figure 1 est une vue en coupe du dispositif de stockage selon l'invention ;
la figure 2 est une perspective illustrant l'invention.
La figure 3 est une vue de côté du dispositif illustré par la figure 1.
La figure 4 est une vue d'un élément du dispositif selon l'invention.

A titre d'exemple d'utilisation de l'invention, on décrit le stockage d'une bande de roulement 1, telle qu'elle est conformée par une opération d'extrusion. L'opération d'extrusion est une opération continue visant à produire en grande longueur toujours le même profit. Il est important que, non seulement les dimensions, la forme précise du profit extrudé, restent rigoureusement inchangées, mais encore, les propriétés rhéologiques du produit extrudées doivent rester constantes tout le long de la bande de roulement.

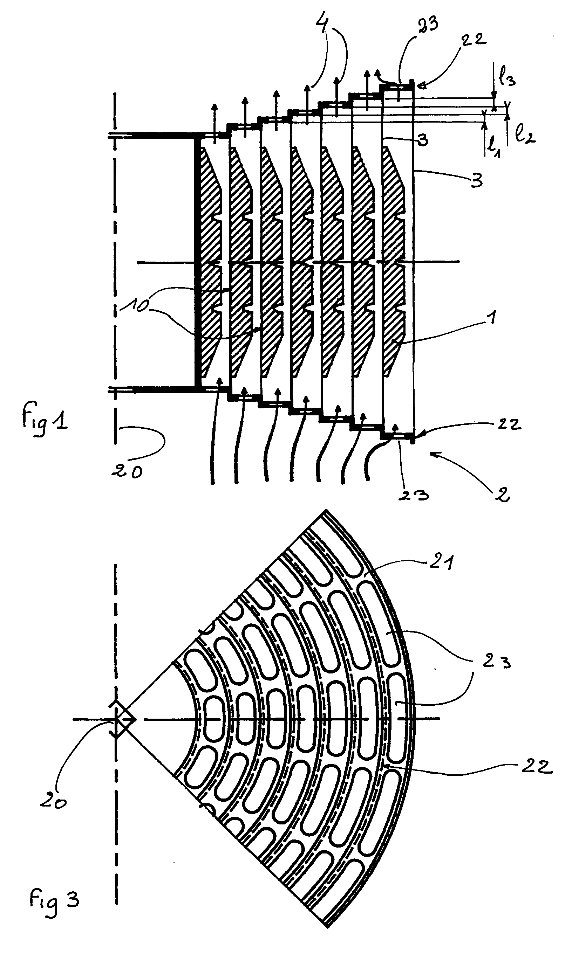

Aux différentes figures, on voit une bobine 2 comportant un axe de rotation 20. La bobine comporte deux flasques 21, chacun pourvu d'un rebord d'appui 22, aménagé du côté axialement intérieur dudit flasque 21. Le rebord d'appui 22 présente l'allure générale d'une spirale formant plusieurs tours. A chaque tour, ledit rebord d'appui 22 se décale axialement vers l'extérieur comme cela apparait très bien à la figure 1.

La spirale que forme le rebord d'appui 22 n'est donc pas comprise dans un plan. Vu en coupe radiale, comme à la figure 1, le rebord d'appui 22 forme un escalier, orienté de telle sorte que l'écart entre rebords d'appui 22 appartenant à des flasques 21 différents, mesuré parallèlement à l'axe de rotation 20 de la bobine 2, augmente progressivement en partant du centre de la bobine 2 vers l'extérieur de celle-ci.

Toujours en observant la coupe radiale à la figure 1, on constate que, de préférence, sur chacun des deux flasques 21, les marches que forment les rebords d'appui 22 sont à égale distance de l'axe de rotation 20. Ainsi, en s'appuyant sur les rebords d'appui 22, on peut enrouler un intercalaire 3 de façon à ce qu'il reste en permanence parallèle à l'axe de rotation de la bobine 2. On reproduit ainsi le même type d'enroulement que ce que l'on obtiendrait en enroulant à spires jointives un intercalaire tel que connu dans l'état de la technique. A chaque tour, ledit rebord d'appui 22 se décale radialement d'une hauteur suffisante pour que, compte tenu de l'épaisseur du produit stocké, il subsiste de préférence au moins un léger jeu entre le produit et la spire suivante de l'intercalaire 3.

L'intercalaire 3 utilisé ici se présente en forme de bande allongée, conçu pour reposer sur les rebords d'appui 22. Sa largeur est donc variable : elle est adaptée à l'écartement axial entre lesdits rebords d'appui 22, lui même variable selon le niveau considéré dans le sens radial.

De préférence, l'écartement axial entre les rebords d'appui 22 de chaque flasque 21 augmente progressivement et régulièrement lorsque l'on se déplace le long d'un rebord depuis les plus petits rayons vers les plus grands rayons. Il est ainsi très facile d'enrouler un intercalaire 3 dont la largeur augmente elle aussi régulièrement, de façon correspondante, en cheminant le long de sa longueur.

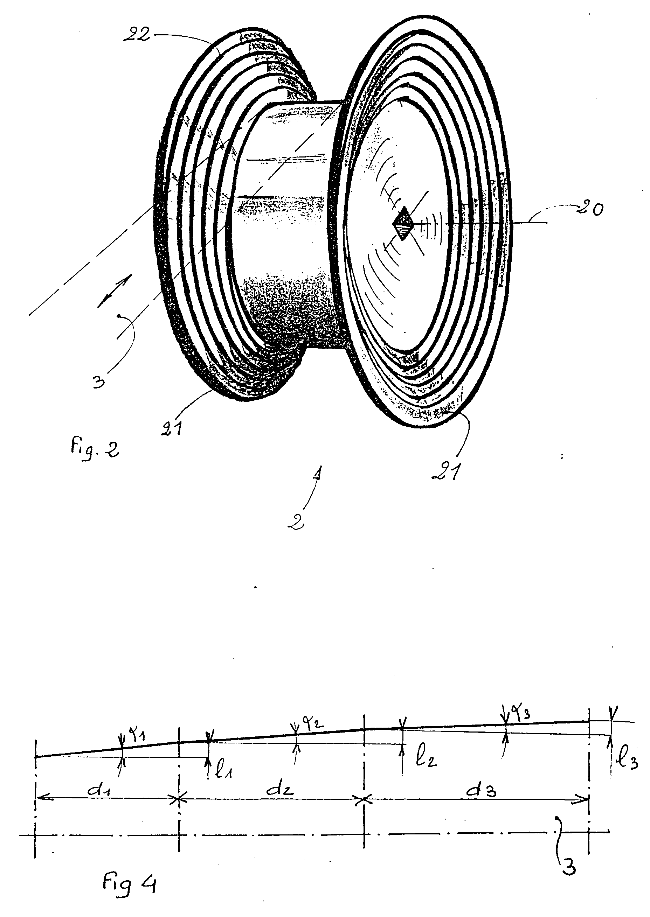

On voit à la figure 1 que l'augmentation de largeur (voir $l_1$, $l_2$, $l_3$) de la bande intercalaire 3 est de même valeur à chaque tour. A la figure 4, on a reporté ladite valeur $l_1 = l_2 = l_3$, ainsi que la longueur développée $d_1 + d_2 + d_3$ de la bande intercalaire 3 pour trois enroulements consécutifs, c'est à dire pour trois arcs de 360°. Puisque le rayon d'enroulement augmente constamment et régulièrement, les tronçons $d_1$, $d_2$ et $d_3$ augmentent en longueur : à la figure 4, on voit que $d_1 < d_2 < d_3$. On constate que, pour une quantité d'accroissement $l_1 = l_2 = l_3$ de la demi-largeur de la bande constante à chaque tour d'enroulement, il faut utiliser une bande dont les bords présentent des segments formant un angle diminuant progressivement au fur et à mesure que la largeur de la bande 3 s'accroit. On constate que $\alpha_1 > \alpha_2 > \alpha_3$. Inversement, on pourrait choisir d'utiliser un intercalaire à bords formant des lignes droites d'angle constant par rapport à la ligne médiane, et dans ce cas la valeur de l'augmentation de largeur d'un rebord d'appui à l'autre sur la bobine va en augmentant avec le rayon d'enroulement.

De façon avantageuse, le dispositif est symétrique par rapport au plan médian perpendiculaire à l'axe de ladite bobine 2.

L'un des problèmes encore mal résolu dans l'état de la technique est de garantir un état thermique aussi homogène que possible au produit en caoutchouc extrudé, quel que soit l'endroit considéré. Au cours du stockage, le produit en caoutchouc cru se refroidit. Avec la plupart des systèmes de stockage utilisés, il refroidit de façon non homogène. Cela est tout particulièrement critique lorsque l'on stocke le produit en bobines. Dans une de ses variantes, l'invention propose un dispositif dans lequel les flasques 21 de la bobine 2 sont ajourés : à la figure 3 en particulier, on aperçoit très bien les percements 23 autorisant la circulation de l'air à l'intérieur de la bobine 2, circulation symbolisée par les flèches 4.

L'invention s'étend aussi à un procédé de stockage en sortie de mise en forme d'un produit en caoutchouc cru, dans lequel ledit produit est déposé à chaud, après ladite mise en forme, sur un intercalaire en forme de bande allongée ayant une largeur variable, toujours croissante en cheminant le long dudit intercalaire d'une extrémité à l'autre, ladite largeur ayant une valeur minimale supérieure ou égale à la largeur du produit extrudé.

Suivant un aspect du procédé de stockage selon la présente invention, ledit intercalaire est ensuite enroulé sur une bobine comportant deux flasques, chacun pourvu d'un rebord d'appui pour soutenir l'intercalaire, aménagé du côté axialement intérieur de chaque flasque, le rebord d'appui ayant l'allure générale d'une spirale formant plusieurs tours, ledit rebord d'appui se décalant, à chaque tour, axialement vers l'extérieur, l'enroulement dudit intercalaire débutant par le côté de largeur minimale de celui-ci.

Faisons observer que, lors de l'enroulement sur une bobine 2 de stockage de l'intercalaire 3 supportant un produit à stocker, ledit intercalaire 3 est enroulé en spirale en allant de la partie de l'intercalaire de largeur la plus petite, immobilisée sur la bobine 2 au point le plus proche de l'axe de rotation de celle-ci, vers la partie de l'intercalaire de largeur la plus grande au fur et à mesure que l'on s'éloigne dudit axe de rotation. Pour accrocher l'intercalaire au départ, on peut par exemple munir celui-ci et la bobine 2 de bandes dites "Velcro" assurant une fixation par simple contact et permettant la libération par traction de force suffisante et de direction correctement orientée. Notons que la partie de cet accrochage par bande "Velcro" fixée sur la bobine offre un point de repère bien visible pour que l'opérateur identifie facilement le point de départ de l'enroulement sur la bobine 2. Il est en effet important que ledit point de départ de l'enroulement respecte un azimut donné afin que l'intercalaire, de largeur variable, se place correctement sur les rebords d'appui 22.

Pour maintenir l'intercalaire à la fin de l'enroulement, on peut là encore utiliser des bandes "Velcro", disposées d'une part sur le prolongement de l'intercalaire 3 au delà de la surface supportant la bande de roulement 1, et d'autre part au dos dudit intercalaire 1 et en arrière d'une distance correspondant à un tour, afin que lesdites bandes "Velcro" se chevauchent en fin d'enroulement. De façon très avantageuse, on peut également prévoir que l'intercalaire 3 a une longueur excédentaire d'un tour, afin que le dernier tour de l'enroulement protège la surface exposée de la bande de roulement.

Lors du déstockage du produit, par exemple de la bande de roulement 1, afin de faciliter le réemploi ultérieur de l'intercalaire 3, on enroule celui-ci au fur et à mesure qu'on le déroule de ladite bobine 2 de stockage pour prélever en continu la bande de roulement 1. L'intercalaire 3 se trouve donc enroulé en commençant par la partie de largeur la plus grande et en finissant cet enroulement, que l'on appellera "enroulement de recyclage", par la partie de largeur la plus petite. C'est la situation inverse de l'enroulement sur la bobine 2 selon l'invention. L'enroulement se trouve ainsi immédiatement prêt à être déroulé simultanément à l'extrusion et à la dépose d'une bande de roulement lors d'une nouvelle étape d'extrusion. Puisque l'enroulement de recyclage se terminait par la partie de l'intercalaire de largeur la plus petite, c'est donc bien cette dernière qui se présente en premier à la bobine 2 au début de l'étape d'extrusion et dépose sur l'intercalaire 3.

Un matériau intéressant pour l'intercalaire est l'aluminium. Il protège la semelle 10 de la bande de roulement 1, ce qui améliore son aptitude à coller, à l'état cru, sur les autres constituants du pneumatique lorsqu'elle sera utilisée lors de l'assemblage d'un pneumatique. En outre, par sa bonne conductivité thermique, l'aluminium contribue à maintenir la bande de roulement 1 à la même température à tous les endroits sur la bobine 2. Un matériau tel que l'acier présente des propriétés similaires. Quant à la bobine 2, elle est de préférence réalisée en matière plastique injectée.

Dans le cas particulier où l'on utilise une bobine 2 dont les flasques 21 sont ajourés, alors de préférence la bobine sur laquelle ledit produit est enroulé est stockée à axe vertical. Ceci favorise grandement les échanges thermiques par convection, comme illustré par les flèches 4 à la figure 1. On peut encore renforcer l'échange par convection en organisant une circulation d'air forcée.

Grâce à l'invention on ne dégrade pas, par le stockage, les qualités d'homogénéité du produit en caoutchouc cru extrudé ou mis en forme. Pour illustrer l'intérêt de l'invention, on peut citer qu'elle a permis d'améliorer la régularité de l'usure des bandes de roulement dans certaines utilisations pénalisantes, et ceci d'une manière très significative.

Bien entendu, l'application de l'invention n'est limitée ni au stockage des bandes de roulement, ni même à l'industrie du pneumatique. Chaque fois que des problèmes de déformation de produits stockés en grande longueur dans un état très plastique se posent, elle pourra être utilisée avec profit.

## Revendications

1. Dispositif de stockage d'un produit en caoutchouc cru, comportant :

   - une bobine (2) comportant deux flasques (21), chacun pourvu d'un rebord d'appui (22) aménagé du côté axialement intérieur dudit flasque (21), le rebord d'appui (22) ayant l'allure générale d'une spirale formant plus de un tour, ledit rebord d'appui se décalant, à chaque tour, axialement vers l'extérieur ;
   - un intercalaire (3) de support dudit produit en caoutchouc, ledit intercalaire (3) ayant la forme de bande allongée, reposant sur lesdits rebords d'appui (22), ayant une largeur variable, adaptée à l'écartement axial entre lesdits rebords d'appui (22).

2. Dispositif selon la revendication 1, dans lequel l'écartement axial entre les rebords (22) de chaque flasque (21) augmente progressivement lorsque l'on se déplace le long d'un rebord (22) depuis les plus petits rayons vers les plus grands rayons, et dans lequel la largeur dudit intercalaire (3) augmente de façon correspondante en cheminant le long de sa longueur.

3. Dispositif selon l'une des revendications 1 à 2, symétrique par rapport au plan médian perpendiculaire à l'axe de ladite bobine (2).

4. Dispositif selon l'une des revendications 1 à 3, dans lequel les flasques (21) de la bobine (2) sont ajourés.

5. Procédé de stockage en sortie de mise en forme d'un produit en caoutchouc cru, dans lequel ledit produit est déposé à chaud, après ladite mise en forme, sur un intercalaire en forme de bande allongée ayant une largeur variable, toujours croissante en cheminant le long dudit intercalaire d'une extrémité à l'autre, ladite largeur ayant une valeur minimale supérieure ou égale à la largeur du produit extrudé.

6. Procédé selon la revendication 5, dans lequel ledit intercalaire est ensuite enroulé sur une bobine comportant deux flasques, chacun pourvu d'un rebord d'appui pour soutenir l'intercalaire, aménagé du côté axialement intérieur de chaque flasque, le rebord d'appui ayant l'allure générale d'une spirale formant plusieurs tours, ledit rebord d'appui se décalant, à chaque tour, axialement vers l'extérieur, l'enroulement dudit intercalaire débutant par le côté de largeur minimale de celui-ci.

7. Procédé selon la revendication 5, dans lequel ledit intercalaire est ensuite enroulé en spirale en allant de la partie de l'intercalaire de largeur la plus petite, immobilisée sur la bobine au point le plus proche de l'axe de rotation de celle-ci, vers la partie de l'intercalaire de largeur la plus grande au fur et à mesure que l'on s'éloigne dudit axe de rotation.

8. Procédé selon la revendication 6 ou 7, utilisant une bobine dont les flasques sont ajourés, dans lequel la bobine sur laquelle ledit produit est enroulé est stockée à axe vertical.

## Claims

1. Device for storage of an uncured rubber product, comprised of:

- a reel (2) composed of two flanges (21), each equipped with a border support portion (22) fitted on the axially interior side of said flange (21), the border support portion (22) having the general appearance of a spiral forming more than one turn, said border support portion being shifted, on each turn, axially towards the outside;
- an interleaf (3) for holding said rubber product, said interleaf (3) having the form of an elongated strip, resting on said border support portions (22), having a variable width, adapted to the axial distance between said border support portions (22).

2. Device according to claim 1, in which the axial distance between the border portions (22) of each flange (21) increases progressively when moving the length of a border portion (22) from the smallest radii towards the largest radii, and in which the width of said interleaf (3) increases in a corresponding manner when moving along its length.

3. Device according to one of claims 1 to 2, symmetrical relative to the median plane perpendicular to the axis of said reel (2).

4. Device according to one of claims 1 to 3, in which the flanges (21) of the reel (2) are perforated.

5. Process of storage at delivery of an uncured rubber product from a forming operation, in which said product is laid out hot, after said forming, on an interleaf in the form of an elongated strip having a variable width, always increasing along the length of said interleaf from one extremity to the other, said width having a minimum value greater than or equal to the width of the extruded product.

6. Process according to claim 5, in which said interleaf is then wound onto a reel composed of two flanges, each equipped with a border support portion for holding the interleaf, fitted on the axially interior side of each flange, the border support portion having the general appearance of a spiral forming several turns, said border support portion being shifted, at each turn, axially towards the outside, the winding of said interleaf starting on the side of minimum width of the latter.

7. Process according to claim 5, in which said interleaf is then wound spirally from the part of the interleaf with the smallest width, immobilized on the reel at the point closest to the axis of rotation of the latter, towards the part of the interleaf with the largest width as movement is made away from said axis of rotation.

8. Process according to claim 6 or 7, using a reel whose flanges are perforated, in which the reel on which said product is wound is stored with a vertical axis.

## Patentansprüche

1. Vorrichtung zum Lagern eines Rohgummiproduktes, mit:

- einem Spulenkörper (2), der zwei Flansche (21) aufweist, von denen jeder mit einem Auflage-Randsteg (22) versehen ist, der auf der axial innenliegenden Seite des genannten Flansches (21) angeordnet ist, wobei der Auflage-Randsteg (22) das allgemeine Aussehen einer Spirale aufweist, die mehr als eine Umdrehung bildet, und sich der genannte Auflage-Randsteg bei jeder Umdrehung axial zur Außenseite hin versetzt; und
- einem Zwischenkörper (3) zum Abstützen des genannten Gummiproduktes, wobei der genannte Zwischenkörper (3) die Form eine länglichen Bandes aufweist, das auf den genannten Auflage-Randstegen (22) aufsitzt und eine variable Breite aufweist, die an den axialen Abstand der genannten Auflage-Randstege (22) angepaßt ist.

2. Vorrichtung nach Anspruch 1, worin der axiale Abstand zwischen den Randstegen (22) eines jeden Flansches (21) sich fortlaufend erhöht, wenn man längs des einen Randsteges (22) von den kleinsten Radien bis zu den größten Radien fortschreitet, und worin die Breite des genannten Zwischenkörpers (3) entsprechend zunimmt, wenn man längs seiner Länge fortschreitet.

3. Vorrichtung nach einem der Ansprüche 1 bis 2, die in Bezug auf die Mittelebene senkrecht zur Achse des genannten Spulenkörpers (2) symmetrisch ist.

4. Vorrichtung nach einem der Ansprüche 1 bis 3, worin die Flansche (21) des Spulenkörpers (2) gelocht sind.

5. Verfahren zum Lagern eines Produktes aus Rohgummi am Auslaß seiner Formgebung, worin das genannte Produkt nach der genannten Formgebung warm auf einem Zwischenkörper in Form eines länglichen Bandes abgelegt wird, das eine variable Breite aufweist, die beim Fortschreiten längs des genannten Zwischenkörpers vom einen Ende zum anderen stets zunimmt, wobei die genannte Breite einen kleinsten Wert aufweist, der größer oder gleich ist der Breite des extrudierten Produktes.

6. Verfahren nach Anspruch 5, worin der genannte Zwischenkörper dann auf einen Spulenkörper aufgerollt wird, der zwei Flansche aufweist, von denen jeder zum Untergreifen des Zwischenkörpers mit einem Auflage-Randsteg versehen ist, der auf der axial innenliegenden Seite eines jeden Flansches angeordnet ist, wobei der Auflage-Randsteg das allgemeine Aussehen einer Spirale aufweist, die mehrere Windungen bildet, und der genannte Auflage-Randsteg sich bei jeder Windung axial zur Außenseite hin versetzt, wobei das Aufwickeln des genannten Zwischenkörpers auf dessen Seite mit kleinster Breite beginnt.

7. Verfahren nach Anspruch 5, worin der genannte Zwischenkörper dann spiralig aufgerollt wird, indem er vom Abschnitt des Zwischenkörpers mit der kleinsten Breite ausgeht, der auf dem Spulenkörper auf dessen der Drehachse nächstgelegenen Punkt festgelegt wird, zum Abschnitt des Zwischenkörpers mit der größten Breite hin, und zwar in dem Maße, in dem man sich von der genannten Drehachse entfernt.

8. Verfahren nach Anspruch 6 oder 7, unter Benutzung eines Spulenkörpers, dessen Flansche gelocht sind, worin der Spulenkörper, auf den das genannte Produkt aufgewickelt ist, mit vertikaler Achse gelagert wird.

fig 1

fig 3

7

Fig. 2

Fig 4